Europäisches Patentamt

European Patent Office

Office européen des brevets

(11) Publication number: **0 256 565**
**B1**

## EUROPEAN PATENT SPECIFICATION

(45) Date of publication of patent specification: **16.08.90**

(51) Int. Cl.⁵: **F 16 N 11/04, F 16 N 7/38**

(21) Application number: **87201047.5**

(22) Date of filing: **04.06.87**

(54) **Lubricating device.**

(30) Priority: **25.06.86 NL 8601665**

(43) Date of publication of application:
**24.02.88 Bulletin 88/08**

(45) Publication of the grant of the patent:
**16.08.90 Bulletin 90/33**

(84) Designated Contracting States:
**CH DE ES FR GB IT LI NL**

(56) References cited:
**FR-A-2 505 719**
**GB-A- 873 411**
**GB-A- 892 769**
**US-A-1 480 688**
**US-A-1 961 514**
**US-A-2 736 307**
**US-A-3 561 565**
**US-A-4 527 661**

**KUGELLAGER-ZEITSCHRIFT, vol. 41, no. 148,**
**1966, pages 15-18, Veenendaal, NL;**
**"Intermittierende Schmierung mit kleinen**
**Fettmengen"**

(73) Proprietor: SKF Industrial Trading &
Development Company B.V.
Kelvinbaan 16 P.O. Box 50
NL-3430 AB Nieuwegein (NL)

(72) Inventor: **Vermeiren, Karel Nathalis**
**Jasmijnlaan 7**
**Woerden (NL)**
Inventor: **Dolfsma, Hendrik**
**Strijpweg 6**
**Tull en 't Waal (NL)**

(74) Representative: **Merkelbach, B.**
**SKF Engineering & Research Centre B.V. P.O.**
**Box 2350**
**NL-3430 DT Nieuwegein (NL)**

Courier Press, Leamington Spa, England.

## Description

The invention concerns a device for supplying a lubricant to a mechanism, in particular a bearing assembly on a rotatable shaft, comprising a container for holding a quantity of lubricant which at its lower edge is provided with a discharge channel for the lubricant and wherein a springloaded pistonlike element is located in such a manner that the force of the spring presses this element in the direction of the discharge-channel, a valve member, normally found in the closed position, which is coupled with control means for at intervals bringing this member into the open and again into the closed position in said discharge-channel, whereto said control means comprise an electric circuit which upon excitation controls the valve member. Such a device is disclosed in the scientific journal "Kullager Zeitschrift" vol. 41, no. 148, 1966.

According to this known device, after it is connected to a bearing assembly to be lubricated, a quantity of lubricant per unit of time is forced through the discharge channel into the bearing under the influence of a predetermined temperature which activates a bi-metal element. However, in case the temperature of the surrounding becomes higher than the maximum switch-temperature of the bi-metal element a special clock- or driving mechanism is needed to move the piston like member. It is obvious that these type of devices introduce irregular lubrication and apparently at lower temperature no lubrication at all, which conditions in the long run are detrimental to a bearing assembly.

Object of the invention is to introduce an improved device of the type as mentioned above. This object is accomplished in that said bearing-shaft assembly is provided with means for generating, upon rotation of the said shaft, electrical energy for feeding said electric circuit.

In this way, only when the shaft rotates, and obviously the bearing supporting this shaft is in operation and the need for lubrication arises, the electrical energy necessary for energizing the timing means will be generated actuating the valve member so that at regular intervals the bearing is provided with the required amount of lubricant.

A proper amount of lubricant is secured in a preferred embodiment of the device whereby on said shaft a ring with magnets is mounted which can cooperate with a coil arranged in said bearing-shaft assembly.

It will be obvious now that when the shaft stops rotating the supply of lubricant is likewise cut-off and waste of lubricant prevented.

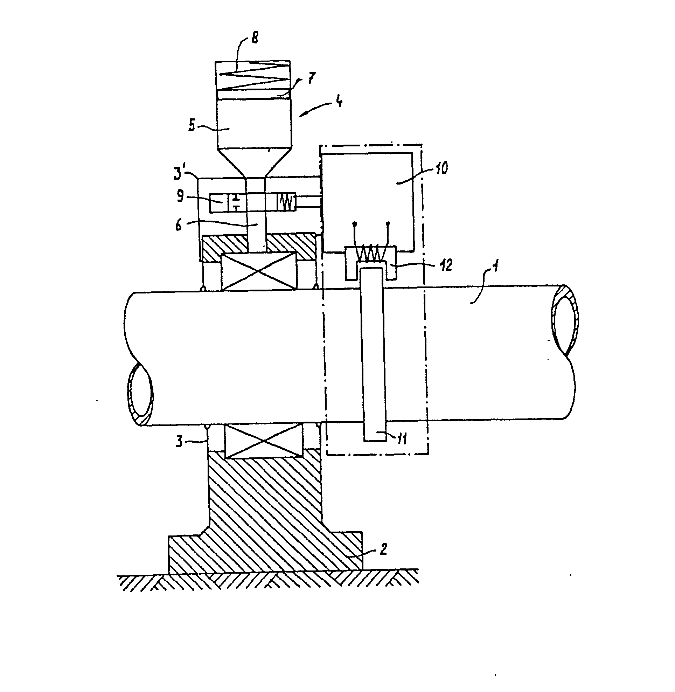

The invention is described in detail with the aid of the drawing, wherein a device according to the invention is illustrated.

As shown in the drawing, a shaft 1 is carried in a rolling bearing 3 supported by a base 2. On the housing 3' of the rolling bearing is mounted a device 4 for supplying a lubricant to the bearing. This device 4 comprises a container 5 for holding a quantity of lubricant, which container is provided at the lower end with a supply channel 6. Inside the container 5 is mounted, displaceable, a pistonlike element 7 on which a tensioned spring 8 acts, so that the gradual expansion of this spring 8 drives the pistonlike element 7 in the direction of the channel 6, and the lubricant for the channel 6 held in the container is at the same time pressed into the rolling bearing 3.

In the discharge channel 6 is mounted a valve member 9, which is normally found in the closed position. The valve member 9 is controlled by an electrical circuit 10 which is set in such a way that at intervals the valve 9 is brought into the open position for a given time, so that during this time a given quantity of lubricant is conveyed out of the container 5 to the bearing 3, after which this supply is discontinued.

The electrical energy for energizing the circuit 10 is generated by means of a ring 11 with magnets, mounted about the shaft 1, which cooperates with a coil 12 that is connected with the housing 3' of the bearing 3. Thus only upon rotation of the shaft 1 will electrical energy for energizing the circuit 10 be generated, so that, likewise, only upon rotation of the shaft 1 can the valve 9 be brought into the open position.

## Claims

1. Device for supplying a lubricant to a bearing assembly on a rotatable shaft, comprising a container for holding a quantity of lubricant which at its lower edge is provided with a discharge channel for the lubricant and wherein a springloaded piston-like element is located in such a manner that the force of the spring presses this element in the direction of the discharge-channel, a valve member, normally found in the closed position, which is coupled with control means for at intervals bringing this member into the open and again into the closed position in said discharge-channel, whereto said control means comprise an electronic circuit which upon excitation controls the valve member, characterized in that said bearing-shaft assembly (1, 3) is provided with means (11, 12) for generating, upon rotation of the said shaft (1), electrical energy for feeding said electrical circuit (10).

2. Device according to claim 1, characterized in that on said shaft (1) a ring (11) with magnets is mounted which can cooperate with a coil (12) arranged in said bearing-shaft assembly (1, 3).

## Patentansprüche

1. Einrichtung zum Zuführen eines Schiermittels zu einem Lagersatz auf einer drehbaren Welle, bestehend aus einem Behälter zur Aufnahme einer Schiermittelmenge, welche an seiner Unterkante mit einem Auslaßkanal für das Schmiermittel ausgestattet ist und in welchem ein federbelastetes kolbenartiges Element in solcher Weise angeordnet ist, daß die Kraft der Feder dieses Element in Richtung zum Auslaßkanal beaufschlagt, und einem normalerweise in Schließstellung angetroffenen Ventil, das mit Steuermitteln zum intervallweisen Versetzen dieses Ventils in die Offenstellung und wieder in die Schließstellung in dem Auslaßkanal gekuppelt ist, wobei die Steuermittel aus einer elektrischen Schaltung bestehen, die bei Erregung das Ventilglied steuert, dadurch gekennzeichnet, daß der Lager-Wellen-Satz (1, 3) mit Mitteln (11, 12) zum Erzeugen von elektrischer Energie für das Speisen der elektrischen Schaltung (10) bei der Drehung der Welle (1) versehen ist.

2. Einrichtung nach Anspruch 1, dadurch gekennzeichnet, daß an der Welle (1) ein Ring (11) mit Magneten angebracht ist, die mit einer in dem Lager-Wellen-Satz (1, 3) angeordneten Spule (12) zusammenwirken können.

**Revendications**

1. Dispositif pour fournir un lubrifiant à un agencement de palier sur un arbre rotatif, comprenant un récipient pour contenir une quantité de lubrifiant qui, au niveau de son bord inférieur, est pourvu d'un conduit de déchargement pour le lubrifiant, et dans lequel un élément analogue à un piston à ressort est disposé de telle manière que la force du ressort pousse cet élément dans la direction du conduit de déchargement, une pièce formant vanne, se trouvant normalement en position fermée, qui est couplée à des moyens de commande pour, périodiquement, mettre cette pièce en position ouverte et, de nouveau, en position fermée dans ledit conduit de déchargement, ce pour quoi lesdits moyens de commande comprennent un circuit électrique, lequel, quand il est excité, commande la pièce formant vanne, caractérisé en ce que ledit ensemble palier-arbre (1, 3) est pourvu de moyens (11, 12) pour produire, lorsque ledit arbre (1) tourne, de l'énergie électrique pour alimenter ledit circuit électrique (10).

2. Dispositif selon la revendication 1, caractérisé en ce que, sur ledit arbre (1), est monté un anneau (11) avec des aimants qui peut coopérer avec une bobine (12) installée dans ledit ensemble palier-arbre (1, 3).